# FASCICULE DE BREVET EUROPEEN

(11) **EP 4 249 787 B1**
(45) Date de publication et mention de la délivrance du brevet: **12.06.2024**
(21) Numéro de dépôt: 23162782.9
(22) Date de dépôt: 20.03.2023
(51) Int. Cl.: F16L 55/053, F02M 37/00

(54) **DISPOSITIF D'AMORTISSEMENT DE PRESSION POUR UN CIRCUIT DE FLUIDE**
DRUCKDÄMPFUNGSVORRICHTUNG FÜR EINEN FLÜSSIGKEITSKREISLAUF
PRESSURE DAMPING DEVICE FOR A FLUID CIRCUIT

(30) Priorité: 24.03.2022 FR 2202642
(43) Date de publication de la demande: 27.09.2023
(73) Titulaire: HUTCHINSON, 75008 Paris (FR)
(72) Inventeur: MORETTI, Nicola, 10090 GASSINO TORINESE (TO) (IT); BRET, Clément, 10139 TORINO (TO) (IT); TANNEAU, Olivier, 93400 SAINT OUEN (FR); ADAM, Kevin, 22360 LANGUEUX (FR)
(74) Mandataire: Gevers & Orès

(56) Documents cités:
- WO-A1-2011/097124
- FR-A1- 2 721 354
- FR-A1- 3 012 849

## Description

### Domaine technique de l'invention

La présente invention concerne un dispositif d'amortissement de pression pour un circuit de fluide, et en particulier pour un circuit de carburant pour un véhicule.

### Arrière-plan technique

L'arrière-plan technique comprend notamment les documents FR-A1-2 721 354, FR-A1-3 012 849 et WO-A1-2011 /097124.

Un dispositif d'amortissement de pression pour un circuit de fluide, et en particulier de carburant, est un dispositif qui permet d'amortir les variations de pression d'un fluide dans un circuit. Dans le cas d'un circuit de carburant pour véhicule automobile, ce type de dispositif permet d'atténuer les pics de pression du carburant qui sont susceptibles de générer des nuisances vibratoires et acoustiques dans l'habitacle du véhicule.

Le document EP-A1-3 532 722 décrit un dispositif d'amortissement de pression pour un circuit de carburant, qui comprend :
- un corps inférieur comportant des ports d'entrée et de sortie de carburant qui sont raccordés à une chambre située entre les ports d'entrée et de sortie,
- un couvercle supérieur fixé sur le corps au-dessus de la chambre, ce couvercle comportant une cavité interne, et
- une membrane élastiquement déformable intercalée entre le corps et le couvercle, la membrane ayant une partie périphérique serrée entre le corps et le couvercle pour assurer une étanchéité entre la chambre et la cavité.

La capacité de déformation élastique de la membrane permet d'atténuer les pics de pression du carburant qui circulent dans la chambre depuis le port d'entrée jusqu'au port de sortie.

Dans ce dispositif, l'amortissement de la pression est uniquement obtenu par cette capacité de déformation. Ce dispositif peut être utilisé pour un circuit de carburant basse pression (typiquement inférieure à 2 bars) voire haute pression (typiquement supérieure ou égale à 2 bars).

Lorsqu'un dispositif d'amortissement est destiné à équiper un circuit haute pression, il comprend en général en plus un ressort qui est logé dans la cavité du couvercle et qui prend appui sur la membrane par l'intermédiaire d'une coupelle.

Dans cette configuration, la raideur du ressort et la capacité de déformation de la membrane participent ensemble à l'amortissement de la pression, ce qui permet l'utilisation du dispositif dans des circuits haute pression.

La présente invention propose un perfectionnement à la technique actuelle, qui permet notamment d'améliorer l'efficacité d'amortissement du dispositif tout en limitant son encombrement.

### Résumé de l'invention

L'invention concerne un dispositif d'amortissement de pression pour un circuit de fluide, ce dispositif comportant :
- un corps inférieur comportant des ports d'entrée et de sortie de fluide qui sont raccordés à une chambre située entre les ports d'entrée et de sortie, le corps étant formé d'une seule pièce et la chambre comportant un premier fond,
- un couvercle supérieur fixé sur le corps au-dessus de la chambre, ce couvercle comportant une cavité interne présentant un second fond orienté vers le premier fond de la chambre,
- une membrane élastiquement déformable intercalée entre le corps et le couvercle, la membrane ayant une forme générale circulaire et comportant une partie centrale qui a une épaisseur constante et une partie périphérique qui est serrée entre le corps et le couvercle pour assurer une étanchéité entre la chambre et la cavité,

- une coupelle circulaire disposée dans la cavité et sur la partie centrale de la membrane, et
- un ressort intercalé entre la coupelle et le second fond de la cavité,
dans lequel le corps comprend un organe de support de la membrane, cet organe de support étant en saillie sur le premier fond et comportant une extrémité supérieure libre sur laquelle la membrane est apte à venir en appui, et dans lequel :
- l'organe s'étend depuis le premier fond le long d'un axe central sur une hauteur qui est inférieure ou égale à une hauteur de la chambre, cet organe ayant un contour circulaire et ayant un diamètre externe D3 mesuré par rapport audit axe,
- la coupelle est centrée sur ledit axe et a un diamètre externe D10 mesuré par rapport audit axe, avec 0,8.D3 < D10 < 1,2.D3, et
- la membrane est centrée sur ledit axe et sa partie périphérique a un diamètre interne de serrage D1 mesuré par rapport audit axe, avec D1 > 1,5.D3.

Une des particularités du dispositif selon l'invention concerne son corps qui est formé d'une seule pièce avec un organe de support de la membrane. La hauteur de cet organe est déterminée pour que la membrane adopte une forme particulière à l'état déformé lorsqu'elle prend appui sur l'extrémité supérieure de cet organe. La membrane est en appui par sa face inférieure sur l'organe et la coupelle prend appui sur la face supérieure de la membrane. La forme de l'organe est en outre déterminée pour être simple et peu encombrante, ce qui facilite la fabrication du corps et donc du dispositif et limite l'impact sur l'encombrement global du dispositif.

Une autre des particularités de l'invention concerne le ratio entre les dimensions transversales de l'organe et de la coupelle, d'une part, et de la dimension transversale de la membrane, et en particulier de sa partie centrale, d'autre part. Ce ratio est déterminé pour qu'une partie significative de la membrane ne soit pas en appui sur l'organe ou la coupelle en fonctionnement et puisse librement se déformer élastiquement en fonctionnement, ce qui permet d'optimiser l'amortissement des pics de pression. En effet, plus la zone déformable de la membrane est grande et plus l'amortissement en pression peut être grand.

Lorsqu'un fluide à basse ou haute pression circule dans le dispositif, une pression est exercée sur la membrane qui va se déformer. La déformation de cette membrane est limitée par le ressort. Le ressort se comprime en fonction de la pression appliquée sur la membrane. L'effet de la déformation de la membrane et du ressort permet une régulation constante et autonome des variations de pression au sein du circuit par augmentation ponctuelle du volume fluide, ce qui implique par conséquent une réduction du bruit présent dans le circuit.

Le dispositif selon l'invention a l'avantage d'être compact et autonome et de pouvoir fonctionner à basse température et haute pression.

Le dispositif selon l'invention peut comprendre une ou plusieurs des caractéristiques suivantes, prises isolément les unes des autres, ou en combinaison les unes avec les autres :
- l'organe a une forme générale tubulaire centrée sur ledit axe ;
- l'organe comprend une paroi tubulaire centrée sur ledit axe et ayant une épaisseur radiale inférieure ou égale à l'épaisseur de la partie centrale de la membrane ;
- la paroi tubulaire comprend au moins deux encoches radiales ;
- les encoches sont diamétralement opposées et/ou s'étendent sur toute la hauteur de l'organe ;
- les ports d'entrée et de sortie sont diamétralement opposés par rapport audit axe et alignés sur un autre axe, lesdites encoches étant décalées par rapport à cet autre axe ;
- la membrane est contrainte et déformée par le ressort de façon à comprendre une première partie au centre qui est plane et en appui sur ledit organe, et une seconde partie autour de la première partie qui est tronconique ;
- la cavité a un diamètre interne D4 mesuré par rapport à l'axe, et la chambre a un diamètre interne D1 mesuré par rapport à l'axe, avec 0,8.D1 < D4 < 1,2.01;
- le couvercle comprend une première dent annulaire de serrage de la membrane, cette première dent comportant un bord périphérique intérieur situé du côté dudit axe, qui est arrondi et présente un rayon de courbure supérieur à 0,5mm, de préférence supérieur ou égal à 0,8mm, et par exemple compris entre 0,8mm et 1mm, et/ou le corps comprend une seconde dent annulaire de serrage de la membrane, cette seconde dent comportant un bord périphérique intérieur situé du côté dudit axe, qui est arrondi et présente un rayon de courbure supérieur à 0,1mm, de préférence supérieur ou égal à 0,2mm, et par exemple compris entre 0,2mm et 0,4mm ;
- la partie périphérique de la membrane comprend une surépaisseur annulaire dont une partie supérieure est reçue dans une gorge annulaire du couvercle et une partie inférieure est reçue dans une gorge annulaire du corps ;
- la partie périphérique de la membrane comprend des ergots en saillie radialement vers l'extérieur par rapport audit axe, ces ergots étant répartis autour de cet axe ;
- la partie centrale de la membrane est plane à l'état sans contrainte (c'est-à-dire sans sollicitation par le ressort ou par le fluide) ;
- la partie centrale de la membrane a une épaisseur supérieure ou égale à 1mm, de préférence supérieure ou égale à 1 ,5mm, et plus préférentiellement supérieure ou égale à 2mm ;
- la membrane est réalisée en FVMQ ;
- le corps comprend un système à glissière, le dispositif comportant en outre un élément de liaison qui est formé d'une seule pièce et comprend deux parties de fixation, la première partie de fixation étant configurée pour coopérer par coulissement avec le système à glissière du corps, et la seconde partie de fixation comportant au moins un patte d'encliquetage élastique ;
   --D1 > 2.D3 ;
   -- ladite hauteur de la chambre est la hauteur maximale de la chambre ;
   -- l'épaisseur de l'organe est inférieure à 2mm, et de préférence inférieure ou égale à 1,5mm ;
   -- D3 est comprise entre 5 et 30mm, et de préférence entre 10 et 20mm, et plus préférentiellement entre 10 et 15mm ;
   -- D1 est comprise entre 10 et 60mm, de préférence entre 20 et 40mm, et plus préférentiellement entre 20 et 30mm ;
   -- D10 est comprise entre 5 et 30mm, de préférence entre 10 et 20mm, et plus préférentiellement entre 10 et 15mm ;
   -- le couvercle est fixé au corps par soudage (c'est-à-dire par un cordon de soudure), et par exemple par thermosoudage ou soudage laser.

La présente invention concerne également un circuit de carburant pour un véhicule, en particulier automobile, comportant au moins un dispositif tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'un dispositif d'amortissement de pression selon l'invention, et illustre ce dispositif à l'état non fonctionnel ;
[Fig. 2] la figure 2 est une vue schématique en perspective d'une membrane du dispositif de la figure 1 ;
[Fig. 3] la figure 3 est une vue schématique en perspective d'un couvercle du dispositif de la figure 1 ;
[Fig. 4] la figure 4 est une vue schématique en perspective d'un corps du dispositif de la figure 1 ;
[Fig. 5] la figure 5 est une vue schématique illustrant une partie du corps de la figure 4 ;
[Fig. 6] la figure 6 est une vue similaire à celle de la figure 1 et illustre le dispositif en cours d'amortissement ;
[Fig. 7] la figure 7 est une vue similaire à celle de la figure 1 et illustre une variante de réalisation du dispositif ;
[Fig. 8] la figure 8 est une vue schématique en perspective du dispositif de la figure 7 et d'une platine de support de ce dispositif ; et
[Fig. 9] la figure 9 est une vue schématique en perspective d'un élément de liaison du dispositif de la figure 7 à la platine de support de la figure 8.

### Description détaillée de l'invention

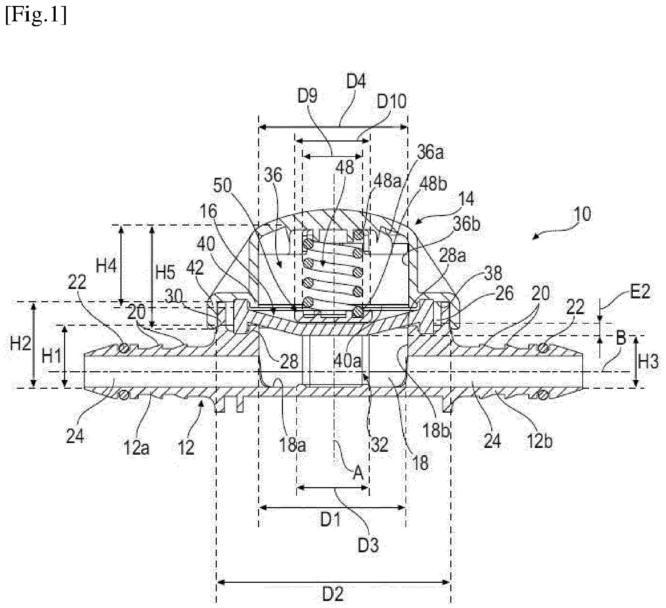

Les figures 1 à 6 illustrent un premier mode de réalisation d'un dispositif 10 d'amortissement de pression pour un circuit de fluide, tel que du carburant. Le dispositif 10 comprend un corps inférieur 12, un couvercle supérieur 14, et une membrane 16 intercalée entre le corps 12 et le couvercle 14.

Le corps 12 est formé d'une seule pièce et comprend un port 12a d'entrée de fluide et un port 12b de sortie de fluide. Le corps 12 est par exemple réalisé par injection-moulage en matière plastique.

Le corps 12 comprend en outre une chambre interne 18 qui est raccordée aux ports 12a, 12b. La chambre 18 comprend un fond 18a à son extrémité inférieure, son extrémité supérieure étant ouverte.

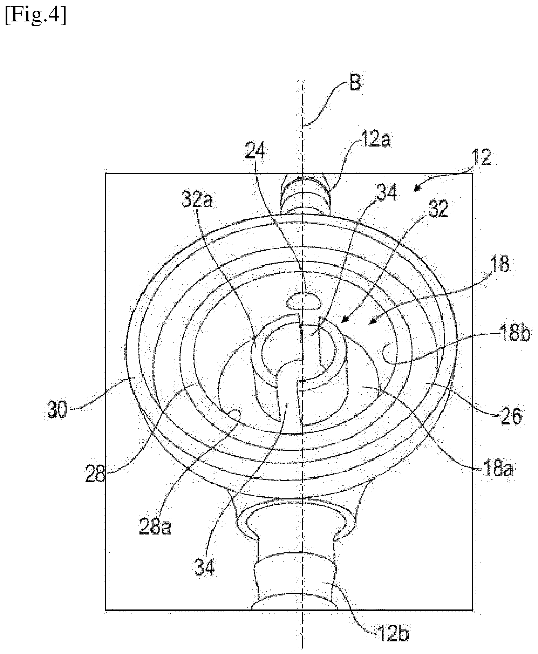

Dans l'exemple représenté, le corps 12 comprend une partie médiane de forme générale circulaire ou cylindrique et qui présente un axe principal noté A (cf. figure 1 et 4). Les ports 12a, 12b s'étendent en saillie depuis cette partie médiane et sensiblement radialement par rapport à l'axe A. Les ports 12a 12b sont ici diamétralement opposés par rapport à l'axe A. Par ailleurs, les ports 12a, 12b sont ici alignés sur un axe B qui est perpendiculaire à l'axe A.

Chacun des ports 12a, 12b comprend une partie tubulaire formant une partie mâle et configurée pour être engagée par emmanchement dans une partie femelle telle que par exemple l'extrémité libre d'un tuyau. Chacun des ports 12a, 12b peut comprendre à sa périphérie externe des nervures d'ancrage 20, en particulier dans le tuyau précité. Chacun des ports 12a, 12b peut être équipé d'un joint d'étanchéité 22 du type torique par exemple.

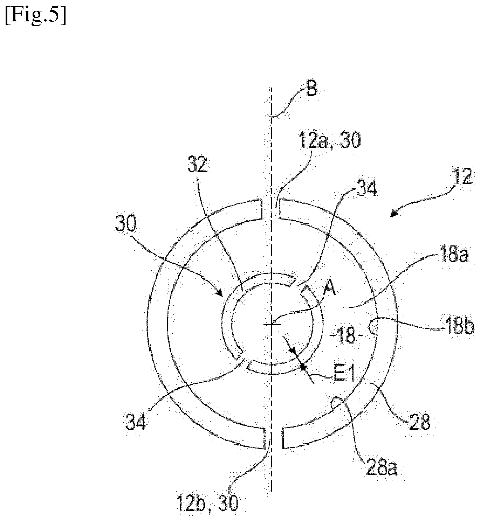

La chambre 18 a une forme générale circulaire ou cylindrique et a un diamètre interne D1 (figure 5). La chambre 18 est définie par une surface cylindrique 18b du corps 12, sur laquelle débouchent des passages internes 24 des ports 12a, 12b. On constate à la figure 1 que les extrémités inférieures de ces passages 24 sont alignées avec le fond 18a de la chambre 18.

La figure 4 montre que le corps 12 comprend à son extrémité supérieure et autour de la chambre 18, une gorge annulaire 26. La gorge 26 est centrée sur l'axe A. Cette gorge 26 est délimitée à sa périphérie interne par une dent annulaire 28 et à sa périphérie externe par un rebord cylindrique 30.

La dent 28 est centrée sur l'axe A. La dent 28 s'étend vers le haut dans une direction parallèle à l'axe A. La dent 28 s'étend dans le prolongement de la surface 18b précitée.

La dent 28 a un diamètre interne D1. Par ailleurs, la dent 28 présente ici une hauteur H1 qui est mesurée depuis le fond 18a dans une direction parallèle à l'axe A.

Avantageusement, la dent 28 comprend à sa périphérie interne un bord périphérique interne 28a qui est incurvée convexe et présente un rayon de courbure supérieur à 0,1mm et qui est par exemple de 0,3mm.

Le rebord 30 est centré sur l'axe A. Le rebord 30 s'étend vers le haut dans une direction parallèle à l'axe A.

Le rebord 30 a un diamètre externe D2. Par ailleurs, le rebord 30 présente ici une hauteur H2 qui est mesurée depuis le fond 18a dans une direction parallèle à l'axe A.

Dans l'exemple représenté, H2 est supérieure à H1. Par ailleurs, D2 est supérieur à D1.

Le corps 12 comprend en outre un organe 32 de support de la membrane 16. Cet organe 32 est en saillie sur le fond 18a et comporte une extrémité inférieure reliée au fond et une extrémité supérieure libre sur laquelle la membrane 16 est apte à venir en appui.

L'organe 32 a un contour circulaire et a un diamètre externe D3 mesuré par rapport à l'axe A.

Avantageusement, comme dans l'exemple représenté, l'organe 32 a une forme générale tubulaire centrée sur l'axe A. L'organe 32 comprend une paroi tubulaire 32a ayant une épaisseur radiale E1.

E1 est de préférence inférieure à 2mm, et plus préférentiellement inférieure ou égale à 1,5mm.

La paroi tubulaire 32a comprend ici deux encoches radiales 34. On constate à la figure 4 que les encoches 34 sont diamétralement opposées l'une par rapport à l'autre.

L'organe 34 a une hauteur H3 mesurée depuis le fond 18a dans une direction parallèle à l'axe A. Dans la figure 1, on constate que H3 est inférieure ou égale à la hauteur de la chambre 18 définie par la hauteur H1 de la dent 30. Dans le cas où la chambre aurait une hauteur variable, H3 serait de préférence inférieure ou égale à la hauteur maximale de la chambre.

On constate également aux figures 1 et 4 que les encoches 34 s'étendent sur toute la hauteur H3 de l'organe 32. Les encoches 32 sont décalées par rapport à l'axe B des ports d'entrée et de sortie 12a, 12b. Autrement dit, les encoches 34 ne sont pas exactement alignés avec les ports d'entrée et de sortie 12a, 12b. Ceci est particulièrement avantageux car cela crée des pertes de charge dans l'écoulement du fluide entre les ports d'entrée et de sortie 12a, 12b, et participe ainsi à l'atténuation des pics de pression.

L'extrémité supérieure de l'organe 32 s'étend dans un plan sensiblement perpendiculaire à l'axe A.

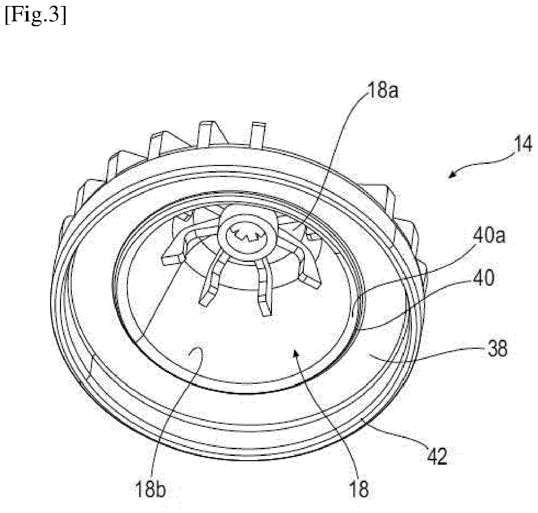

Le couvercle 14 du dispositif 10 est visible aux figures 1 et 3. Il est fixé sur le corps 12 au-dessus de la chambre 18.

Le couvercle 14 est formé d'une seule pièce. Il est par exemple réalisé par injection-moulage en matière plastique.

Le couvercle 14 comporte une cavité interne 36 qui est séparée de la chambre 18 par la membrane 16.

La cavité 36 a un diamètre interne D4 mesuré par rapport à l'axe. De préférence : 0,8.D1 < D4 < 1,2.D1.

La cavité 36 comprend un fond 36a qui est orienté vers le fond 18a de la chambre 18.

Le couvercle 14 a une forme générale circulaire ou cylindrique dans l'exemple représenté. La cavité 36 est définie par une surface cylindrique 36b du couvercle 14.

La figure 3 montre que le couvercle 14 comprend à son extrémité inférieure et autour de la cavité 36, une gorge annulaire 38. La gorge 38 est centrée sur l'axe A lorsque le couvercle 14 est monté sur le corps 12. Cette gorge 38 est délimitée à sa périphérie interne par une dent annulaire 40 et à sa périphérie externe par un rebord cylindrique 42.

La dent 40 est destinée à être centrée sur l'axe A. La dent 40 s'étend vers le bas dans une direction parallèle à l'axe A. La dent 40 s'étend dans le prolongement de la surface 36b précitée.

La dent 40 a un diamètre interne D4. Par ailleurs, la dent 40 présente ici une hauteur H4 qui est mesurée depuis le fond 36a dans une direction parallèle à l'axe A.

Avantageusement, la dent 40 comprend à sa périphérie interne un bord périphérique interne 40a qui est incurvé convexe et présente un rayon de courbure supérieur ou égal à 0,5mm et de préférence supérieur ou égal à 0,8mm.

Le rebord 42 est centré sur l'axe A. Le rebord 42 s'étend vers le bas dans une direction parallèle à l'axe A.

Le rebord 42 a un diamètre interne D2. Par ailleurs, le rebord 42 présente ici une hauteur H5 qui est mesurée depuis le fond 36a dans une direction parallèle à l'axe A.

Dans l'exemple représenté, H5 est supérieure à H4.

Avantageusement, D1 et D4 sont proches, identiques ou similaires.

Lors du montage du couvercle 14 sur le corps 12, le couvercle 14 est centré sur l'axe A et le rebord 42 du couvercle 14 est monté autour du rebord 30 du corps 12. Ces rebords 30, 42 sont alors fixés ensemble par exemple par soudage, et en particulier thermosoudage ou soudage laser. A l'issue du thermosoudage, les gorges 26, 38 peuvent être partiellement ou entièrement comblées par de la matière fondue par soudage. Le soudage laser permet de solidariser les rebords 30, 42 sans comblement des gorges 26, 38.

La membrane 16 est élastiquement déformable et est de préférence réalisée en fluorosilicone et par exemple FVMQ qui est un matériau particulièrement avantageux car il permet à la membrane 16 de conserver ses propriétés élastiques sur une grande plage de température et en particulier à des températures inférieures à 0°C. La plate de température est par exemple de -40°C à 150°C.

La membrane 16 est intercalée entre le corps 12 et le couvercle 14. Elle a une forme générale circulaire centrée sur l'axe A.

La membrane 16 comporte une partie centrale 16a qui a une épaisseur constante E2 et une partie périphérique 16b qui est serrée entre le corps 12 et le couvercle 14 pour assurer une étanchéité entre la chambre 18 et la cavité 36. E2 est par exemple supérieure ou égale à 1mm, de préférence supérieure ou égale à 1,5mm, et plus préférentiellement supérieure ou égale à 2mm.

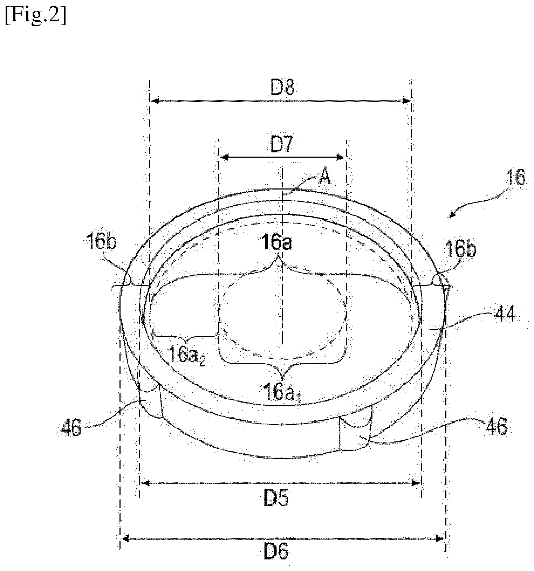

La figure 2 montre la membrane 16 à l'état non déformé et sans contrainte. On constate que sa partie centrale 16a est plane ou plate. On constate également que la partie périphérique 16b de la membrane 16 comprend une surépaisseur annulaire 44 dont une partie supérieure est reçue dans la gorge 38 du couvercle 14 et une partie inférieure est reçue dans la gorge 26 du corps 12.

La surépaisseur annulaire 44 a un diamètre interne D5 et un diamètre externe D6.

De plus, la partie périphérique 16b de la membrane 16 comprend des ergots 46 en saillie radialement vers l'extérieur par rapport à l'axe A. Ces ergots 46 sont répartis autour de cet axe A, de préférence régulièrement, et sont avantageusement configurés pour prendre appui sur le rebord 30 du corps 12 de façon à centrer la membrane 16 sur l'axe A.

La partie centrale 16a de la membrane 16 comprend une première partie 16a1 au centre et une seconde partie 16a2 autour de la première partie 16a. La première partie 16a a un diamètre externe D7 et la seconde partie a un diamètre externe D8.

Par ailleurs, la partie centrale 16a comprend deux faces circulaires opposées et parallèles, respectivement supérieure et inférieure.

En considérant les figures 1 et 2, on voit que les dents de serrage 28, 40 sont configurées pour serrer et pincer entre elles la jonction entre la partie centrale 16a et la partie périphérique 16b de la membrane 16. Le serrage s'étend en direction radiale depuis les diamètres internes D1, D4 des dents 28, 40 jusqu'aux diamètres externes de ces dents 28, 40 ou jusqu'au diamètre interne D5 de la surépaisseur 44. Dans la mesure où D1 et D4 sont identiques (D1 = D4) ou proches (0,8.D1 < D4 < 1,2.D1), on peut donc considérer que D1 est le diamètre interne de serrage de la membrane 16.

Le dispositif 10 comprend en outre un ressort 48 et une coupelle 50 qui sont logés dans la cavité 36.

Le ressort 48 est centré sur l'axe A et est ici un ressort hélicoïdal. Le ressort 48 a une extrémité supérieure 48a qui prend appui sur le fond 36a de la cavité 36 et qui peut être centrée sur ce fond 36a par coopération de formes avec une portion complémentaire de ce fond 36a. Le ressort 48 comprend en outre une extrémité inférieure 48b qui prend appui sur la coupelle 50 qui est intercalée entre le ressort 48 et la face supérieure de la membrane 16. La coupelle 50 est centrée sur l'axe A et peut également comprendre une portion complémentaire de l'extrémité inférieure 48b du ressort 48 pour la centrer sur l'axe A.

Le ressort 48 a un diamètre externe D9 et la coupelle 50 a un diamètre externe D10. De préférence, 0,8.D9 < D10 < 1,2.D9 et/ou 0,8.D3 < D9 < 1,2.D3 et/ou 0,8.D3 < D10 < 1,2.D3.

On constate à la figure 1 que la membrane 16 est contrainte et déformée par le ressort 48 de façon à ce que sa première partie 16a1 soit plane et en appui sur l'extrémité supérieure de l'organe 32, et sa seconde partie 16a2 soit tronconique. La seconde partie 16a2 s'évase du bas vers le haut.

Selon l'invention, D1 est supérieur à 1,5.D3, de préférence D1 est supérieur 1,8.D3, plus préférentiellement D1 est supérieur à 2.D3. Par exemple, D1 est égal à 2,2.D3. Ceci permet à la membrane 16 d'avoir une bonne capacité de déformation élastique car une grande partie de celle-ci est libre de se déformer élastiquement sans être en appui sur une pièce ou sollicitée par une pièce.

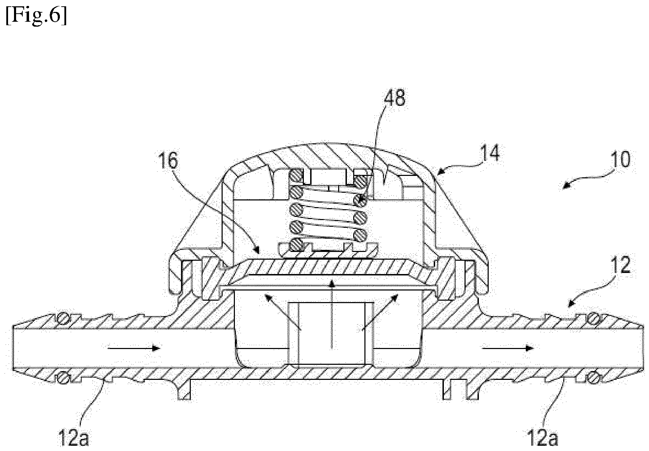

La figure 6 montre le dispositif 10 de la figure 1 en cours d'utilisation. Les flèches montrent la circulation du fluide et par exemple du carburant depuis le port d'entrée 12a jusqu'au port de sortie 12b. Au niveau de la chambre 18, il y une atténuation des pics de pression liée aux pertes de charge engendrées par l'organe de support 32. Lorsque la pression du fluide dépasse un certain seuil, qui est fonction de la capacité de déformation de la membrane 16 et de la raideur du ressort 48, le ressort 48 se comprime et la membrane 16 se déforme en s'écartant de l'organe 32. Autrement dit, lorsque la pression du fluide est inférieure au seuil précité, la membrane 16 reste contrainte par le ressort 48 et en appui sur l'organe de support 32. Lorsqu'un pic de pression apparaît dans le dispositif 10, la membrane 16 est contrainte par le fluide et se déforme. La tronconicité de la membrane 16 et en particulier de sa seconde partie 16a2 peut alors s'inverser. La compression du ressort 48 et la déformation de la membrane 16 amortissent alors le pic de pression du fluide au-delà du seuil précité.

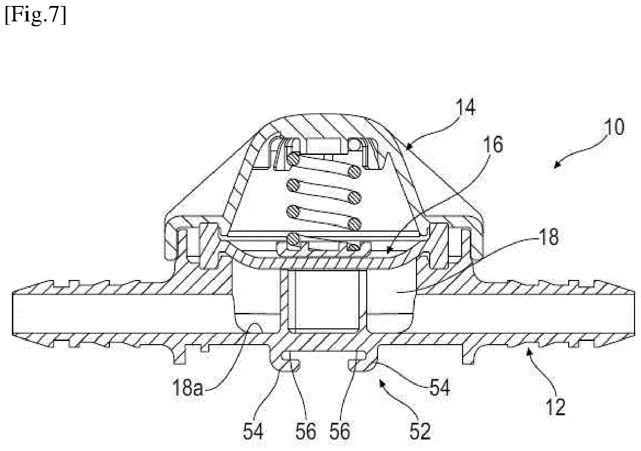

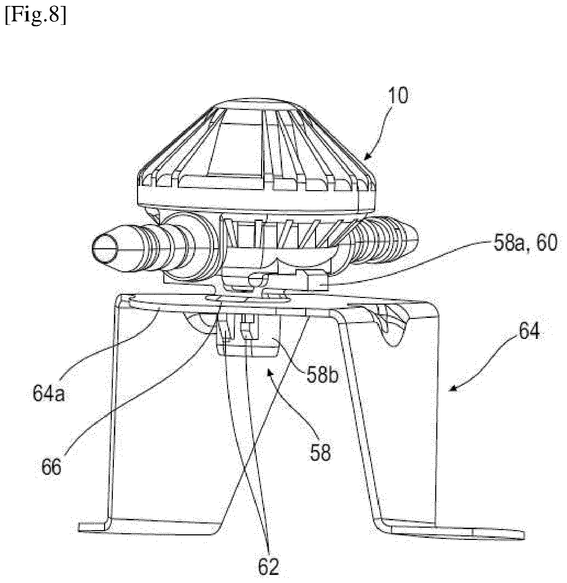

Les figures 7 et 8 illustrent une variante de réalisation du dispositif 10 selon l'invention qui diffère de celui décrit dans ce qui précède essentiellement en ce que son corps 12 comprend un système à glissière 52.

Dans l'exemple représenté, ce système à glissière 52 est situé sous le corps 12, juste au-dessous du fond 18a de la chambre 18. Ce système à glissière 52 comprend par exemple deux crochets latéraux 54 parallèles qui ont une forme générale en L ou C et qui définissent des ouvertures 56 en regard l'une de l'autre.

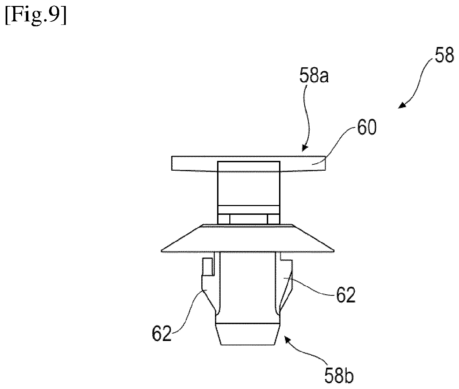

Le dispositif 10 comporte en outre un élément de liaison 58 représenté seul à la figure 9. Cet élément de liaison 58 est formé d'une seule pièce et comprend deux parties de fixation 58a, 58b. La première partie de fixation 58a est configurée pour coopérer par coulissement avec le système à glissière 52 et comprend par exemple un rail 60 configuré pour être engagé entre les crochets 54 et en particulier dans leurs ouvertures 56.

La seconde partie de fixation 58b comporte une ou plusieurs pattes 62 d'encliquetage élastique.

La figure 8 montre le dispositif 10 de la figure 7 fixé sur une platine de support 64 au moyen de l'élément de liaison 58 de la figure 9. La platine 64 a une forme générale en U inversé ou Ω et comprend une paroi supérieure 64a munie d'un orifice 66 dans lequel est engagé la seconde partie de fixation 58b de l'élément de liaison 58. Les pattes 62 coopèrent par encliquetage élastique avec les bords de cet orifice 66 et assurent la retenue de l'élément de liaison 58 dans l'orifice 66. Préalablement ou postérieurement au montage de l'élément de liaison 58 sur la platine 64, le rail 60 de l'élément de liaison 58 peut être engagé par coulissement dans les crochets 54 du système à glissière 52. Le dispositif 10 est alors maintenu fixement sur la platine 64 et peut en être désolidarisé si besoin par actionnement manuel des pattes 62 et retrait de l'élément de liaison 58 de la platine 64, ou extraction du rail 60 des crochets 54 du dispositif 10.

Le dispositif 10 peut ainsi être monté dans des environnements présentant de fortes contraintes d'intégration.

## Revendications

1. Dispositif (10) d'amortissement de pression pour un circuit de fluide, ce dispositif comportant :
- un corps (12) inférieur comportant des ports (12a, 12b) d'entrée et de sortie de fluide qui sont raccordés à une chambre (18) située entre les ports (12a, 12b) d'entrée et de sortie, le corps (12) étant formé d'une seule pièce et la chambre (18) comportant un premier fond (18a),
- un couvercle (14) supérieur fixé sur le corps (12) au-dessus de la chambre (18), ce couvercle (14) comportant une cavité interne (36) présentant un second fond (36a) orienté vers le premier fond (18a) de la chambre (18),
- une membrane (16) élastiquement déformable intercalée entre le corps (12) et le couvercle (14), la membrane (16) ayant une forme générale circulaire et comportant une partie centrale (16a) qui a une épaisseur (E2) constante et une partie périphérique (16b) qui est serrée entre le corps (12) et le couvercle (14) pour assurer une étanchéité entre la chambre (18) et la cavité (36),
- une coupelle (50) circulaire disposée dans la cavité (36) et sur la partie centrale (16a) de la membrane (16), et
- un ressort (48) intercalé entre la coupelle (50) et le second fond (36a) de la cavité (36),
dans lequel le corps (12) comprend un organe (32) de support de la membrane (16), cet organe de support (32) étant en saillie sur le premier fond (18a) et comportant une extrémité supérieure libre sur laquelle la membrane (16) est apte à venir en appui,
et dans lequel :
- l'organe (32) s'étend depuis le premier fond (18a) le long d'un axe central (A) sur une hauteur (H3) qui est inférieure ou égale à une hauteur (H1) de la chambre (18), cet organe (32) ayant un contour circulaire et ayant un diamètre externe D3 mesuré par rapport audit axe (A),
- la coupelle (50) est centrée sur ledit axe (A) et a un diamètre externe D10 mesuré par rapport audit axe (A), avec 0,8.D3 < D10 < 1,2.D3, et
- la membrane (16) est centrée sur ledit axe (A) et sa partie périphérique (16b) a un diamètre interne de serrage D1 mesuré par rapport audit axe (A), avec D1 > 1,5.D3.

2. Dispositif (10) selon la revendication 1, dans lequel l'organe (32) a une forme générale tubulaire centrée sur ledit axe (A).

3. Dispositif (10) selon la revendication 2, dans lequel l'organe (32) comprend une paroi tubulaire (32a) centrée sur ledit axe (A) et ayant une épaisseur radiale (E1) inférieure ou égale à l'épaisseur (E2) de la partie centrale (16a) de la membrane (16).

4. Dispositif (10) selon la revendication 3, dans lequel la paroi tubulaire (32a) comprend au moins deux encoches (34) radiales.

5. Dispositif (10) selon la revendication 4, dans lequel les encoches (34) sont diamétralement opposées et/ou s'étendent sur toute la hauteur (H3) de l'organe (32).

6. Dispositif (10) selon la revendication 4 ou 5, dans lequel les ports (12a, 12b) d'entrée et de sortie sont diamétralement opposés par rapport audit axe (A) et alignés sur un autre axe (B), lesdites encoches (34) étant décalées par rapport à cet autre axe (B).

7. Dispositif (10) selon l'une des revendications précédentes, dans lequel la membrane (16) est contrainte et déformée par le ressort (48) de façon à comprendre une première partie (16a1) au centre qui est plane et en appui sur ledit organe (32), et une seconde partie (16a2) autour de la première partie (16a1) qui est tronconique.

8. Dispositif (10) selon l'une des revendications précédentes, dans lequel la cavité (36) a un diamètre interne D4 mesuré par rapport à l'axe (A), et la chambre (18) a un diamètre interne D1 mesuré par rapport à l'axe (A), avec 0,8.D1 < D4 < 1,2.D1.

9. Dispositif (10) selon l'une des revendications précédentes, dans lequel le couvercle (14) comprend une première dent annulaire (40) de serrage de la membrane (16), cette première dent (40) comportant un bord périphérique intérieur (40a) situé du côté dudit axe (A), qui est arrondi et présente un rayon de courbure compris supérieur à 0,5mm, et/ou le corps (12) comprend une seconde dent annulaire de serrage (28) de la membrane (16), cette seconde dent (28) comportant un bord périphérique intérieur (28a) situé du côté dudit axe (A), qui est arrondi et présente un rayon de courbure supérieur à 0,1mm.

10. Dispositif (10) selon l'une des revendications précédentes, dans lequel la partie périphérique (16b) de la membrane (16) comprend une surépaisseur annulaire (44) dont une partie supérieure est reçue dans une gorge annulaire (38) du couvercle (14) et une partie inférieure est reçue dans une gorge annulaire (26) du corps (12).

11. Dispositif (10) selon l'une des revendications précédentes, dans lequel la partie périphérique (16b) de la membrane (16) comprend des ergots (46) en saillie radialement vers l'extérieur par rapport audit axe (A), ces ergots (46) étant répartis autour de cet axe (A).

12. Dispositif (10) selon l'une des revendications précédentes, dans lequel la partie centrale (16a) de la membrane (16) est plane à l'état sans contrainte.

13. Dispositif (10) selon l'une des revendications précédentes, dans lequel la partie centrale (16a) de la membrane a une épaisseur (E2) supérieure ou égale à 1mm, de préférence supérieure ou égale à 1,5mm, et plus préférentiellement supérieure ou égale à 2mm.

14. Dispositif (10) selon l'une des revendications précédentes, dans lequel le corps (12) comprend un système à glissière (52), le dispositif (10) comportant en outre un élément de liaison (58) qui est formé d'une seule pièce et comprend deux parties de fixation (58a, 58b), la première partie de fixation (58a) étant configurée pour coopérer par coulissement avec le système à glissière (52) du corps (12), et la seconde partie de fixation (58b) comportant au moins un patte (62) d'encliquetage élastique.

15. Circuit de carburant pour un véhicule, en particulier automobile, comportant au moins un dispositif (10) selon l'une des revendications précédentes.

## Patentansprüche

1. Druckdämpfungsvorrichtung (10) für einen Flüssigkeitskreislauf, wobei diese Vorrichtung umfasst:
- einen unteren Körper (12), der Flüssigkeitseingangs- undausgangsanschlüsse (12a, 12b) umfasst, die mit einer Kammer (18) verbunden sind, die sich zwischen den Eingangs- und Ausgangsanschlüssen (12a, 12b) befindet, wobei der Körper (12) einstückig gebildet ist und die Kammer (18) einen ersten Boden (18a) umfasst,
- eine obere Abdeckung (14), die über der Kammer (18) am Körper (12) befestigt ist, wobei diese Abdeckung (14) einen inneren Hohlraum (36) umfasst, der einen zweiten Boden (36a) aufweist, der zum ersten Boden (18a) der Kammer (18) gerichtet ist,
- eine elastisch verformbare Membran (16), die zwischen dem Körper (12) und der Abdeckung (14) eingefügt ist, wobei die Membran (16) eine allgemeine kreisförmige Form aufweist und einen zentralen Abschnitt (16a), der eine konstante Dicke (E2) aufweist, und einen Umfangsabschnitt (16b) umfasst, der zwischen dem Körper (12) und der Abdeckung (14) gespannt ist, um eine Dichtung zwischen der Kammer (18) und dem Hohlraum (36) zu gewährleisten,
einen kreisförmigen Federteller (50), der im Hohlraum (36) und auf dem zentralen Abschnitt (16a) der Membran (16) angeordnet ist, und
- eine Feder (48), die zwischen dem Federteller (50) und dem zweiten Boden (36a) des Hohlraums (36) eingefügt ist,
wobei der Körper (12) ein Stützorgan (32) der Membran (16) umfasst, wobei dieses Stützorgan (32) aus dem ersten Boden (18a) hervorsteht und ein freies oberes Ende umfasst, auf dem die Membran (16) aufzuliegen geeignet ist,
und wobei:
- sich das Organ (32) ausgehend vom ersten Boden (18a) entlang einer zentralen Achse (A) auf einer Höhe (H3) erstreckt, die kleiner oder gleich einer Höhe (H1) der Kammer (18) ist, wobei dieses Organ (32) eine kreisförmige Kontur aufweist und einen in Bezug auf die Achse (A) gemessenen Außendurchmesser D3 aufweist,
- der Federteller (50) auf der Achse (A) zentriert ist und einen in Bezug auf die Achse (A) gemessenen Außendurchmesser D10 aufweist, mit 0,8.D3 < D10 < 1,2.D3, und
die Membran (16) auf der Achse (A) zentriert ist und ihr Umfangsabschnitt (16b) einen in Bezug auf die Achse (A) gemessenen inneren Spanndurchmesser D1 aufweist, mit D1 > 1,5.D3.

2. Vorrichtung (10) nach Anspruch 1, wobei das Organ (32) eine allgemeine röhrenförmige, auf der Achse (A) zentrierte Form aufweist.

3. Vorrichtung (10) nach Anspruch 2, wobei das Organ (32) eine röhrenförmige, auf der Achse (A) zentrierte Wand (32a) umfasst, die eine radiale Dicke (E1) kleiner oder gleich der Dicke (E2) des zentralen Abschnitts (16a) der Membran (16) aufweist.

4. Vorrichtung (10) nach Anspruch 3, wobei die röhrenförmige Wand (32a) mindestens zwei radiale Aussparungen (34) umfasst.

5. Vorrichtung (10) nach Anspruch 4, wobei die Aussparungen (34) diametral gegenüberliegend sind und/oder sich über die gesamte Höhe (H3) des Organs (32) erstrecken.

6. Vorrichtung (10) nach Anspruch 4 oder 5, wobei die Eingangs- und Ausgangsanschlüsse (12a, 12b) in Bezug auf die Achse (A) diametral gegenüberliegend sind und auf einer anderen Achse (B) ausgerichtet sind, wobei die Aussparungen (34) in Bezug auf diese andere Achse (B) versetzt sind.

7. Vorrichtung (10) nach einem der vorstehenden Ansprüche, wobei die Membran (16) durch die Feder (48) derart eingeschränkt und verformt wird, dass sie in der Mitte einen ersten Abschnitt (16a1), der eben ist und auf dem Organ (32) aufliegt, und um den ersten Abschnitt (16a1) herum einen zweiten Abschnitt (16a2) umfasst, der kegelstumpfförmig ist.

8. Vorrichtung (10) nach einem der vorstehenden Ansprüche, wobei der Hohlraum (36) einen in Bezug auf die Achse (A) gemessenen Innendurchmesser D4 aufweist und die Kammer (18) einen in Bezug auf die Achse (A) gemessenen Innendurchmesser D1 aufweist, mit 0,8.01 < D4 < 1,2.D1.

9. Vorrichtung (10) nach einem der vorstehenden Ansprüche, wobei die Abdeckung (14) ein erstes ringförmiges Spannritzel (40) der Membran (16) umfasst, wobei dieses erste Ritzel (40) einen inneren Umfangsrand (40a) umfasst, der sich auf der Seite der Achse (A) befindet, die gerundet ist und einen Krümmungsradius größer als 0,5 mm aufweist, und/oder der Körper (12) ein zweites ringförmiges Spannritzel (28) der Membran (16) umfasst, wobei dieses zweite Ritzel (28) einen inneren Umfangsrand (28a) umfasst, der sich auf der Seite der Achse (A) befindet, die gerundet ist und einen Krümmungsradius größer als 0,1 mm aufweist.

10. Vorrichtung (10) nach einem der vorstehenden Ansprüche, wobei der Umfangsabschnitt (16b) der Membran (16) eine ringförmige Verdickung (44) umfasst, bei der ein oberer Abschnitt in einer ringförmigen Nut (38) der Abdeckung (14) aufgenommen ist und ein unterer Abschnitt in einer ringförmigen Nut (26) des Körpers (12) aufgenommen ist.

11. Vorrichtung (10) nach einem der vorstehenden Ansprüche, wobei der Umfangsabschnitt (16b) der Membran (16) Stifte (46) umfasst, die in Bezug auf die Achse (A) radial zur Außenseite hervorstehen, wobei diese Stifte (46) um diese Achse (A) herum verteilt sind.

12. Vorrichtung (10) nach einem der vorstehenden Ansprüche, wobei der zentrale Abschnitt (16a) der Membran (16) im uneingeschränkten Zustand eben ist.

13. Vorrichtung (10) nach einem der vorstehenden Ansprüche, wobei der zentrale Abschnitt (16a) der Membran eine Dicke (E2) größer oder gleich 1 mm aufweist, vorzugsweise größer oder gleich 1,5 mm, und bevorzugter größer oder gleich 2 mm.

14. Vorrichtung (10) nach einem der vorstehenden Ansprüche, wobei der Körper (12) ein Gleitschienensystem (52) umfasst, wobei die Vorrichtung (10) weiter ein Verknüpfungsglied (58) umfasst, das einstückig gebildet ist und zwei Befestigungsabschnitte (58a, 58b) umfasst, wobei der erste Befestigungsabschnitt (58a) konfiguriert ist, um durch Gleiten mit dem Gleitschienensystem (52) des Körpers (12) zusammenzuwirken, und der zweite Befestigungsabschnitt (58b) mindestens eine elastische Einrastlasche (62) umfasst.

15. Kraftstoffkreislauf für ein Fahrzeug, insbesondere Automobilfahrzeug, umfassend mindestens eine Vorrichtung (10) nach einem der vorstehenden Ansprüche.

## Claims

1. A pressure damping device (10) for a fluid circuit, this device comprising:
- a lower body (12) comprising fluid inlet and outlet ports (12a, 12b) which are connected to a chamber (18) located between the inlet and outlet ports (12a, 12b), the body (12) being formed in one single piece and the chamber (18) comprising a first bottom (18a),
- an upper cover (14) attached to the body (12) above the chamber (18), this cover (14) comprising an internal cavity (36) with a second bottom (36a) oriented towards the first bottom (18a) of the chamber (18),
- an elastically deformable membrane (16) interposed between the body (12) and the cover (14), the membrane (16) being generally circular in shape and comprising a central portion (16a) which has a constant thickness (E2) and a peripheral portion (16b) which is clamped between the body (12) and the cover (14) to ensure a seal between the chamber (18) and the cavity (36),
- a circular cup (50) arranged in the cavity (36) and on the central portion (16a) of the membrane (16), and
- a spring (48) interposed between the cup (50) and the second bottom (36a) of the cavity (36),
wherein the body (12) comprises a support member (32) for supporting the membrane (16), this support member (32) projecting from the first bottom (18a) and comprising a free upper end on which the membrane (16) is adapted to be supported,
and in which:
- the member (32) extends from the first bottom (18a) along a central axis (A) to a height (H3) which is less than or equal to a height (H1) of the chamber (18), this member (32) having a circular outline and having an external diameter D3 measured with respect to said axis (A),
- the cup (50) is centred on said axis (A) and has an external diameter D10 measured with respect to said axis (A), with 0.8×D3 < D10 < 1.2xD3, and
- the membrane (16) is centred on said axis (A) and its peripheral portion (16b) has a clamping internal diameter D1 measured with respect to said axis (A), with D1 > 1.5xD3.

2. The device (10) according to claim 1, wherein the member (32) is generally tubular in shape centred on said axis (A).

3. The device (10) according to claim 2, wherein the member (32) comprises a tubular wall (32a) centred on said axis (A) and having a radial thickness (E1) less than or equal to the thickness (E2) of the central portion (16a) of the membrane (16).

4. The device (10) according to claim 3, wherein the tubular wall (32a) comprises at least two radial notches (34).

5. The device (10) according to claim 4, wherein the notches (34) are diametrically opposed and/or extend over the entire height (H3) of the member (32).

6. The device (10) according to claim 4 or 5, wherein the inlet and outlet ports (12a, 12b) are diametrically opposed with respect to said axis (A) and aligned on a further axis (B), said notches (34) being offset with respect to this further axis (B).

7. The device (10) according to one of the preceding claims, wherein the membrane (16) is constrained and deformed by the spring (48) so as to comprise a first portion (16a1) at the centre which is planar and is supported on said member (32), and a second portion (16a2) around the first portion (16a1) which is frustoconical.

8. The device (10) according to one of the preceding claims, wherein the cavity (36) has an internal diameter D4 measured with respect to the axis (A), and the chamber (18) has an internal diameter D1 measured with respect to the axis (A), with 0.8xD1 < D4 < 1.2×01.

9. The device (10) according to one of the preceding claims, wherein the cover (14) comprises a first annular tooth (40) for clamping the membrane (16), this first tooth (40) comprising an inner peripheral edge (40a) located on the side of said axis (A), which is rounded and has a radius of curvature greater than 0,5mm, and/or the body (12) comprises a second annular clamping tooth (28) of the membrane (16), this second tooth (28) comprising an inner peripheral edge (28a) located on the side of said axis (A), which is rounded and has a radius of curvature greater than 0.1mm.

10. The device (10) according to one of the preceding claims, wherein the peripheral portion (16b) of the membrane (16) comprises an annular allowance (44), an upper portion of which is received in an annular gorge (38) of the cover (14) and a lower portion of which is received in an annular gorge (26) of the body (12).

11. The device (10) according to one of the preceding claims, wherein the peripheral portion (16b) of the membrane (16) comprises lugs (46) projecting radially outwards with respect to said axis (A), these lugs (46) being distributed around this axis (A).

12. The device (10) according to one of the preceding claims, wherein the central portion (16a) of the membrane (16) is planar in the unconstrained state.

13. The device (10) according to one of the preceding claims, wherein the central portion (16a) of the membrane has a thickness (E2) greater than or equal to 1mm, preferably greater than or equal to 1.5mm, and more preferably greater than or equal to 2mm.

14. The device (10) according to one of the preceding claims, wherein the body (12) comprises a slide system (52), the device (10) further comprising a connection element (58) which is formed in one single piece and comprises two attachment portions (58a, 58b), the first attachment portion (58a) being configured to cooperate by sliding with the slide system (52) of the body (12), and the second attachment portion (58b) comprising at least one elastic snap-fit tab (62).

15. A fuel circuit for a vehicle, in particular a motor vehicle, comprising at least one device (10) according to one of the preceding claims.
